# EUROPEAN PATENT APPLICATION

(11) **EP 4 282 621 A1**
(43) Date of publication of application: **29.11.2023**
(21) Application number: 22175317.1
(22) Date of filing: 25.05.2022
(51) Int. Cl.: B29C 64/118, B29C 64/209, B29C 64/295, B29C 64/314, B29C 64/321, B33Y 30/00, B33Y 40/00, B22F 10/00

(54) **ADDITIVE MANUFACTURING DEVICE FOR PRINTING OF A THERMOPLASTIC FILAMENT WITH AN EMBEDDED ELECTRICAL CABLE**

(71) Applicant: Airbus Operations GmbH, 21129 Hamburg (DE)
(72) Inventor: Linde, Peter, 21129 Hamburg (DE); Hegenbart, Matthias, 21129 Hamburg (DE)

(57) **Abstract**

An additive manufacturing device for printing of a thermoplastic filament with an embedded electrical cable comprises a coaxial merging station configured to receive a cable core, the cable core comprising at least one electrical conductor, and to coaxially coat the cable core with at least one functional cable material to form an electrical cable, the at least one functional cable material being made malleable by application of temperature and comprising at least one of an electric insulator, an electromagnetic shielding, a thermal insulator and a mechanical protector; and a coaxial extruder configured to receive the electrical cable from the coaxial merging station, to coaxially embed the electrical cable in a thermoplastic filament material made malleable by application of temperature and to extrude the thermoplastic filament material with the embedded electrical cable as a thermoplastic filament.

## Description

The present invention pertains to an additive manufacturing device for printing of a thermoplastic filament with an embedded electrical cable and a component manufactured with such a device.

Recently, systems for additive manufacturing, i.e. 3D printing, have been brought on the market, which make it possible to add fibers directly to the core of extruded material. For example, Orbital Composites introduced a machine a few years ago that uses a single extruder moving like a traditional FDM hotend. However, unlike other hotends, continuous carbon fibers are added to the core of the extruded material. This is done via a specially designed coaxial extruder which coats the strands of fiber in plastic prior to being extruded. As plastic enters into the hotend, it melts and is forced to swirl around before being moved into an extruder tube where a nozzle adds a fiber directly into the center of the hot tube extrusion. The plastic and fiber bond together while exiting the nozzle. The nozzle has the ability to extrude pure plastic like a normal extruder, as well as pure fiber or any mixture ratio of the two.

Against this background, it is an object of the present invention to find solutions for integrating electrical cables into additively manufactured components in a flexible manner.

This object is achieved by an additive manufacturing device having the features of claim 1 and a component having the features of claim 14.

According to an aspect of the invention, an additive manufacturing (AM) device for printing of a thermoplastic filament with an embedded electrical cable comprises a coaxial merging station configured to receive a cable core, the cable core comprising at least one electrical conductor, and to coaxially coat the cable core with at least one functional cable material to form an electrical cable, the at least one functional cable material being made malleable by application of temperature and comprising at least one of an electric insulator, an electromagnetic shielding, a thermal insulator and a mechanical protector; and a coaxial extruder configured to receive the electrical cable from the coaxial merging station, to coaxially embed the electrical cable in a thermoplastic filament material made malleable by application of temperature and to extrude the thermoplastic filament material with the embedded electrical cable as a thermoplastic filament

According to a further aspect of the invention, a component is manufactured from a thermoplastic filament using the AM device according to the invention and having an electrical cable embedded therein at least in portions.

Thus, one idea of the present invention is to provide an AM device with the ability to integrate an electrical cable into a thermoplastic filament such that various different material layers can be added selectively to the core of the cable during the process. In that vein, the machine is able to integrate various different types of electrical cables with different configurations into an additively manufactured component. In this manner, the final component can be furnished with electrical systems without having to compromise with regards to configuration, orientation and/or shape. For example, sharp turns of the electrical lines and tailored material combinations may be realized. Moreover, splices, connections and so on can be easily built into a component based on the present manufacturing approach.

Amongst others, electrical insulation, electromagnetic shielding, thermal insulation and/or mechanical protection with varying thicknesses can be added to the core of a cable, e.g. a single wire, twisted wires etc.. The thus formed cable is then used within a thermoplastic filament to additively manufacture at least portions of a component. It is to be understood in this respect that the present 3D printing device may selectively print pure thermoplastic filaments without the embedded cables, the latter being introduced in the printed material only in specific parts of the manufactured component.

Advantageous embodiments and improvements of the present invention are found in the subordinate claims.

According to an embodiment of the invention, the AM device may further comprise at least one laser source configured to heat up the thermoplastic filament material and/or the at least one functional cable material.

For example, a laser source may be integrated in or connected with the coaxial extruder to melt up a supply feed of thermoplastic filament material coming from a material supply outside the coaxial extruder and the printing head of the machine. The molten material may be moved forward to a position inside the machine where it is met by the electrical cable. As the filament material is malleable, the electrical cable, which is equally moved forward, e.g. by feeding wheels or the like rotating with the same speed as corresponding feeding wheels for the filament material, may then enter the filament material, which subsequently swirls around and embeds the cable. The cable center may be kept in position by adequate means, e.g. other feed/distance/spacer wheels during this process. The combined material combination may then be extruded as a filament at a nozzle of the coaxial extruder. After cool off, the filament then forms rigid parts of the component, into which a cable is integrated.

According to an embodiment of the invention, the thermoplastic filament material and each of the functional cable materials may have a respectively associated laser source for the application of temperature.

Hence, each material feed may have its own laser for melting/heating, which may be optimized for the respective material with regards to temperature and irradiation parameters. It should be noted in this respect that in other embodiments also a single laser source or other heat source may in principle be used to apply temperature to all or at least several of the functional cable materials (and potentially also the filament material).

According to an embodiment of the invention, each functional cable material may be fed from a separate material supply and heated up individually.

To this end, temperature monitoring may be provided at the respective locations where the different materials are heated and/or combined with the preceding material layers.

According to an embodiment of the invention, the coaxial merging station may comprise several substations for coaxially coating the cable core with several functional cable materials one after the other.

Hence, the cable may be built up stepwise from the inside to the outside by adding one layer of material after the other.

According to an embodiment of the invention, the functional cable materials may be coated onto the cable core one after the other after being heated up to descending respective melting temperatures.

Thus, the materials for the outer layers of the electrical cable have descending melting temperatures, that is, each consecutive layer is made from a material that needs to be heated up to slighter lower temperature than the one before it. It is to be understood however that it may be possible in some cases to use substantially equal temperatures for two or more consecutive layers. The melting temperature should ideally at least not increase for subsequent layers as this may otherwise compromise the respectively preceding layers.

According to an embodiment of the invention, the thermoplastic filament material may have a melting temperature below the melting temperatures of each functional cable material.

Consequently, the thermoplastic filament material may feature the lowest melting temperature of all used materials as it is added at the final step of the process chain.

According to an embodiment of the invention, the at least one functional cable material may comprise a thermoplastic.

Hence, the functional cable materials may also comprise suitable thermoplastic materials.

According to an embodiment of the invention, the electrically insulating material may comprise a thermoplastic with integrated glass fibers.

The glass fibers may not only provide electrical insulation but potentially also mechanical reinforcement.

According to an embodiment of the invention, the electromagnetic shielding may comprise a thermoplastic with integrated carbon nanotubes.

Carbon nanotubes, and potentially also other carbon allotropes, help to keep the materials as light and efficient as possible materials. Such material reinforcements are gaining importance, due to the many advantages they exhibit in comparison to the materials that were used until now. Carbon nanotubes have shown particular potential as reinforcement fillers in materials to enhance an EMI shielding material owing to their large specific surface area, well-defined 3D networking structure, and unique electronic structure.

According to an embodiment of the invention, the thermal insulator and/or the mechanical protector may comprise PVC.

It is to be understood that also other suitable materials may be used for this purpose. Moreover, additional layers of yet other materials may be added to the electrical cables depending on the use case at hand.

According to an embodiment of the invention, the coaxial extruder and/or the coaxial merging station may comprise temperature resistant feeding wheels to feed and coaxially merge the respectively fed materials.

The wheels may be used to move the respective materials forward, to orient them within and without the machine and/or to compress them within and/or along portions of the feed lines.

According to an embodiment of the invention, the temperature resistant feeding wheels may comprise titanium.

It is to be understood however that also other materials could be employed that feature adequately high temperature resistance and robustness for extended operation.

According to an embodiment of the invention, the coaxial extruder may have an extrusion nozzle with a diameter configured such that the thermoplastic filament material is compressed around the electrical cable during extrusion.

The nozzle thus may reduce a feed line diameter and thus the transported filament somewhat to ensure that the filament material is fully distributed around the electrical cable with the desired density and diameter.

According to an embodiment of the invention, the coaxial merging station may be integrated together with the coaxial extruder in a single printing head.

Thus, in accordance with a multi-material, multi-functional printing concept, the whole system may be integrated in a single printing head. The filament material may be entered from a rear side for example, while the cable core and the individual functional materials may be fed to the print head from several inlets on the side spaced apart from each other in order to cover the cable core layer by layer with the respective materials before it is combined with the filament material.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 shows a detailed cross-sectional view of aspects of an additive manufacturing device according to an embodiment of the invention.
Fig. 2 shows a schematic cross-sectional view of a component manufactured with the device of Fig. 1.
Fig. 3 shows a perspective view of the additive manufacturing device of Fig. 1.
Fig. 4 shows a perspective view of an additive manufacturing device according to another embodiment of the invention.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

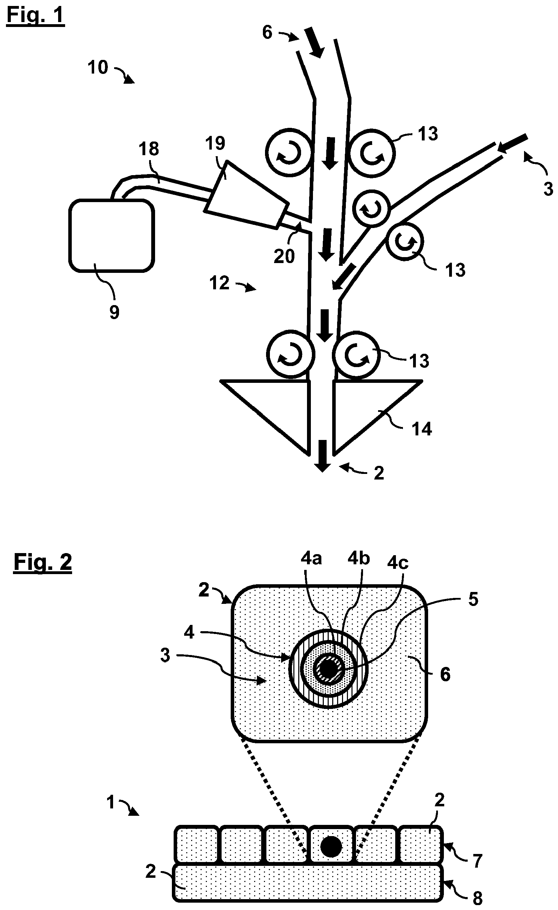

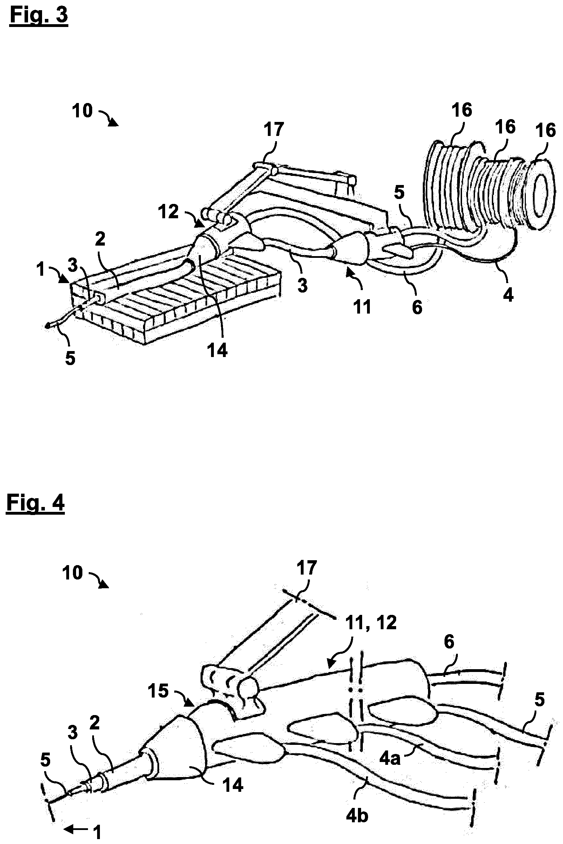

Figures 1 and 3 depict an additive manufacturing (AM) device 10, i.e. a 3D-printing machine, according to an embodiment of the invention.

The AM device 10 is provided for printing 3D components 1 based on layer-wise deposition of thermoplastic filaments 2 serving as modelling material that is extruded in a malleable form and then cooled off on a printing platform to form a rigid object. An example for such a component 1 is shown in Fig. 2, which also illustrates that the thermoplastic filament 2 contains an embedded electrical cable 3 at least in specific portions of the component 1. The AM device 10 is able to form the cable 3 including one or several coating layers of functional cable material 4 and embed it into the filament 2 in one single production process, as will be explained further below.

In this manner, the AM device 10 is able to manufacture a part with integrated electrical cables 3 in a much more uncompromising manner than commonly possible. As opposed to working with cables that have pre-manufactured cover layers, the device 10 permits arbitrary dimensions and configurations for the cable 3 and its functional layers, which may still be varied during the printing process itself. Moreover, cables 3 may be integrated into components 1 in a highly flexible manner, e.g. sharp turns are possible and other complex three-dimensional arrangements.

The at least one functional cable material 4 may comprise a thermoplastic and may include amongst others an electrically insulating material 4a, e.g. a thermoplastic with integrated glass fibers, an electromagnetic shielding 4b, e.g. a thermoplastic with integrated carbon nanotubes, and a thermal insulator/mechanical protector 4c, e.g. a PVC. These different materials 4a-c are coated one after the other around a cable core 5, as can be seen in Fig. 2.

To be able to print such a configuration of cable 3 and filament material 6, the AM device 10 comprises amongst others a coaxial merging station 11, as can be seen in Fig. 3, which is configured to receive a cable core 5 from a material supply 16, the cable core 5 comprising at least one electrical conductor, e.g. a copper wire, several twisted copper wires etc. The coaxial merging station 11 is configured to coaxially coat the cable core 5 with at least on functional cable material 4 also coming from a respective material supply 16 to form an electrical cable 3.

The thus formed electrical cable 3 is then fed to a coaxial extruder 12 (cf. Figs. 1 and 3) configured to receive the electrical cable 3 from the coaxial merging station 11 and to coaxially embed the electrical cable 3 in a thermoplastic filament material 6 (also taken from a respective material supply 16). The coaxial extruder 12 then extrudes the thermoplastic filament material 6 with the embedded electrical cable 3 as thermoplastic filament 2 at an extrusion nozzle 14 (cf. Fig. 1). To this end, the extrusion nozzle 14 may be moved in three-dimensions relative to a build plate using a printer arm 17, e.g. a robotic arm.

As can be seen in Fig. 1, the thermoplastic filament material 6 is fed from the material supply 16 to the coaxial extruder 12, e.g. in solid form, by means of several feeding wheels 13, which pull and/or push the thermoplastic filament material 6 along a feed line. The material 6 is then heated-up by a laser beam 20 and thereby made malleable due to the application of temperature. The laser beam 20 is generated by a dedicated laser source 9, which supplies suitable corresponding laser optics 19 via an optical cable 18.

The material 6 is transported further in the now malleable state and pressed forward by the solid state feeding from behind. Further downstream, the cable 3 is then entered laterally. The cable 3 may also be moved forward by corresponding feeding wheels 13, which may rotate with the same speeds as the feeding wheels 13 for the filament material 6. When joined with the malleable filament material 6, the cable 3 is kept in position by respective feeding/distance wheels 13, which may be resistant against high temperatures, e.g. by choosing a suitable material like Titanium, for example. The extrusion nozzle 14 then reduces the diameter of the filament material 6 together with the inserted cable 3 to ensure that the filament material 6 is fully distributed around the cable 3. Finally, the thermoplastic filament material 6 is then extruded with the embedded electrical cable 3 as a thermoplastic filament 2.

In a similar vein as shown in Fig. 1, also the at least one functional cable material 4 can be made malleable by application of temperature by one or several dedicated further laser sources (not shown in Fig. 1 or 3). Each of the functional cable materials 4 may be fed from a separate material supply 16 and heated up individually. Movement may also be actuated by corresponding feeding wheels. The coaxial merging station 11 may comprise several substations for coaxially coating the cable core 5 with several functional cable materials 4 one after the other. The functional cable materials 4 may then be coated onto the cable core 5 one after the other after being heated up to descending respective melting temperatures. The thermoplastic filament material 6 may have a corresponding melting temperature below the melting temperatures of each functional cable material 4.

Such an arrangement is indicated with reference to Fig. 4, which shows a further embodiment of the invention, where both the coaxial merging station 11 and the coaxial extruder 12 are integrated in a single printing head 15. The printing head 15 features several supply channels in the back and on the lateral sides for feeding the filament material 6, the cable core 5 and the different functional cable materials 4a, 4b etc. For each material a separate laser heating may be provided within the printing head 15. Adequate temperature monitoring may also be provided. The printing head 15 may then be moved/rotated in the usual manner within three dimensions to form a component 1 layer by layer by depositing the filament 2.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### List of reference signs

- 1: component
- 2: thermoplastic filament
- 3: electrical cable
- 4: functional cable material
- 4a: electric insulator
- 4b: electromagnetic shielding
- 4c: mechanical protector
- 5: cable core
- 6: thermoplastic filament material
- 7: material layer
- 8: transverse material layer
- 9: laser source
- 10: additive manufacturing device
- 11: coaxial merging station
- 12: coaxial extruder
- 13: temperature resistant feeding wheel
- 14: extrusion nozzle
- 15: printing head
- 16: material supply
- 17: printer arm
- 18: optical cable
- 19: laser optics
- 20: laser beam

## Claims

1. Additive manufacturing, AM, device (10) for printing of a thermoplastic filament (2) with an embedded electrical cable (3), comprising:
a coaxial merging station (11) configured to receive a cable core (5), the cable core (5) comprising at least one electrical conductor, and to coaxially coat the cable core (5) with at least one functional cable material (4) to form an electrical cable (3), the at least one functional cable material (4) being made malleable by application of temperature and comprising at least one of an electric insulator (4a), an electromagnetic shielding (4b), a thermal insulator and a mechanical protector (4c); and
a coaxial extruder (12) configured to receive the electrical cable (3) from the coaxial merging station (11), to coaxially embed the electrical cable (3) in a thermoplastic filament material (6) made malleable by application of temperature and to extrude the thermoplastic filament material (6) with the embedded electrical cable (3) as a thermoplastic filament (2).

2. AM device (10) according to claim 1, further comprising at least one laser source (9) configured to heat up at least one of the thermoplastic filament material (6) and the at least one functional cable material (4).

3. AM device (10) according to claim 2, wherein the thermoplastic filament material (6) and each of the functional cable materials (4) have a respectively associated laser source (9) for the application of temperature.

4. AM device (10) according to one of the claims 1 to 3, wherein each of the functional cable materials (4) is fed from a separate material supply (16) and heated up individually.

5. AM device (10) according to one of the claims 1 to 4, wherein the coaxial merging station (11) comprises several substations for coaxially coating the cable core (5) with several functional cable materials (4) one after the other.

6. AM device (10) according to claim 5, wherein the functional cable materials (4) are coated onto the cable core (5) one after the other after being heated up to descending respective melting temperatures.

7. AM device (10) according to one of the claims 1 to 6, wherein the thermoplastic filament material (6) has a melting temperature below the melting temperatures of each functional cable material (4).

8. AM device (10) according to one of the claims 1 to 7, wherein the at least one functional cable material (4) comprises a thermoplastic.

9. AM device (10) according to claim 8, wherein at least one of the following applies:
the electrically insulating material (4a) comprises a thermoplastic with integrated glass fibers;
the electromagnetic shielding (4b) comprises a thermoplastic with integrated carbon nanotubes; and
the thermal insulator and/or the mechanical protector (4c) comprises PVC.

10. AM device (10) according to one of the claims 1 to 9, wherein at least one of the coaxial extruder (12) and the coaxial merging station (11) comprise temperature resistant feeding wheels (13) to feed and coaxially apply the respectively fed materials (4, 6).

11. AM device (10) according to claim 10, wherein the temperature resistant feeding wheels (13) comprise titanium.

12. AM device (10) according to one of the claims 1 to 11, wherein the coaxial extruder (12) has an extrusion nozzle (14) with a diameter configured such that the thermoplastic filament material (6) is compressed around the electrical cable (3) during extrusion.

13. AM device (10) according to one of the claims 1 to 12, wherein the coaxial merging station (11) is integrated together with the coaxial extruder (12) in a single printing head (15).

14. Component (1) manufactured from a thermoplastic filament (2) using the AM device (10) according to one of the claims 1 to 13 and having an electrical cable (3) embedded therein at least in portions.
